# EUROPÄISCHE PATENTSCHRIFT

(11) **EP 4 420 085 B1**
(45) Veröffentlichungstag und Bekanntmachung des Hinweises auf die Patenterteilung: **17.09.2025**
(21) Anmeldenummer: 22801792.7
(22) Anmeldetag: 13.10.2022
(51) Int. Cl.: G06T 11/00

(54) **COMPUTER-IMPLEMENTIERTES VERFAHREN ZUR ERZEUGUNG SYNTHETISCHER BILDER ZUM TRAINIEREN KÜNSTLICHER INTELLIGENZ (AI)**
COMPUTER-IMPLEMENTED METHOD FOR GENERATING SYNTHETIC IMAGES FOR TRAINING ARTIFICIAL INTELLIGENCE (AI)
PROCÉDÉ MIS EN OEUVRE PAR ORDINATEUR POUR GÉNÉRER DES IMAGES SYNTHÉTIQUES POUR FORMATION D'INTELLIGENCE ARTIFICIELLE (IA)

(30) Priorität: 18.10.2021 DE 102021126965
(43) Veröffentlichungstag der Anmeldung: 28.08.2024
(73) Patentinhaber: Mira Vision Holding Gmbh, 73529 Schwäbisch Gmünd (DE)
(72) Erfinder: MILL, Leonid, 81637 München (DE)
(74) Vertreter: WSL Patentanwälte Partnerschaft mbB
(86) Internationale Anmeldenummer: PCT/EP2022/078584
(87) Internationale Veröffentlichungsnummer: WO 2023/066792

(56) Entgegenhaltungen:
- US-A1- 2017 236 013
- LEONID MILL ET AL: "Synthetic Image Rendering Solves Annotation Problem in Deep Learning Nanoparticle Segmentation", ARXIV.ORG, CORNELL UNIVERSITY LIBRARY, 201 OLIN LIBRARY CORNELL UNIVERSITY ITHACA, NY 14853, 20 November 2020 (2020-11-20), XP081818858
- TRAMPERT PATRICK ET AL: "Deep Neural Networks for Analysis of Microscopy Images-Synthetic Data Generation and Adaptive Sampling", CRYSTALS, vol. 11, no. 3, 5 March 2021 (2021-03-05), pages 258, XP093004299, DOI: 10.3390/cryst11030258
- MALM PATRIK ET AL: "Simulation of bright-field microscopy images depicting pap-smear specimen", CYTOMETRY A, vol. 87, no. 3, 8 January 2015 (2015-01-08), pages 212 - 226, XP093004335, ISSN: 1552-4922, Retrieved from the Internet <URL:https://onlinelibrary.wiley.com/doi/full-xml/10.1002/cyto.a.22624> [retrieved on 20221202], DOI: 10.1002/cyto.a.22624
- KOZUBEK MICHAL: "When Deep Learning Meets Cell Image Synthesis", CYTOMETRY A, vol. 97, no. 3, 30 December 2019 (2019-12-30), pages 222 - 225, XP093004863, ISSN: 1552-4922, Retrieved from the Internet <URL:https://onlinelibrary.wiley.com/doi/full-xml/10.1002/cyto.a.23957> [retrieved on 20221205], DOI: 10.1002/cyto.a.23957

## Beschreibung

### GEGENSTAND DER ERFINDUNG

Die Erfindung betrifft ein computerimplementiertes Verfahren zur Erzeugung synthetischer Bilder für das Training künstlicher Intelligenz (Kl) und ein Computerprogramm mit Programmcode zur Durchführung des Verfahrens.

### HINTERGRUND DER ERFINDUNG

Bilderkennung wird auf vielen technischen Gebieten eingesetzt, um relevante Informationen aus einem Bild zu gewinnen und weiter zu verarbeiten. Beispiele sind Handschriftenerkennung, Gesichtserkennung, Qualitätskontrolle in industriellen Produktionsprozessen, die Erfassung und Auswertung von unterschiedlichen Verkehrssituationen in Fahrzeugassistenzsystemen, aber auch die Auswertung der Ergebnisse bildgebender Diagnostik und mikroskopischer Aufnahmen von Gewebeschnitten, Zellkulturen, Abstrichen und anderen biologischen Materialien in der Medizin.

Um die gewünschten Informationen aus einem Bild zu gewinnen, müssen bestimmte Merkmale identifiziert und extrahiert werden, während andere Bildinformationen vernachlässigt werden. Eine anspruchsvolle Aufgabe bei der Bildanalyse ist dabei die Unterscheidung zwischen den spezifischen Merkmalen von Interesse und irrelevanten oder "Hintergrund"-Bildinformationen. Eine besondere Herausforderung stellen in diesem Zusammenhang die Identifizierung und Unterscheidung solcher Merkmale von Interesse dar, die im realen Bild in ihrer Erscheinung nicht gleichbleibend sind, sondern in vielerlei Hinsicht variieren können, z. B. in Bezug auf Größe, Form, Anzahl, Farbe, Anordnung im Verhältnis zu anderen Merkmalen usw., die aber dennoch zur gleichen Klasse interessierender Merkmale gehören.

Ein Beispiel ist die Untersuchung medizinischer oder biologischer Proben, beispielsweise mikroskopischer Aufnahmen, wie Zellkulturaufnahmen oder Gewebeschnitte aus klinischen Quellen für die pathologische Diagnostik oder histologische Untersuchung. Solche Proben natürlichen Ursprungs können stark variieren in Abhängigkeit von der Probenart, Probennahme, Präparation, des pathologischen Zustands, aber auch aufgrund der natürlichen Variationsbreite selbst im gleichen Probentyp.

Der Mensch ist aufgrund seiner kognitiven Fähigkeiten für die "manuelle" Bilderkennung und -analyse besonders prädestiniert. Dennoch erfordert die menschliche Bilderkennung in vielen Fällen Training und Erfahrung, ist subjektiv, fehleranfällig sowie zeit- und ressourcenaufwendig. Daher ist die "manuelle" Bildauswertung in vielen Fällen ungeeignet, wenn ein zuverlässiger hoher Durchsatz bei der Analyse großer Mengen von Bilddaten oder eine Bilderkennung in Echtzeit erforderlich ist. Eine automatisierte, schnelle und zuverlässige computergestützte Bilderkennung und -analyse ist wünschenswert.

Zum Stand der Technik bei computergestützten Bildanalyselösungen gehören Methoden der künstlichen Intelligenz (KI), die auf maschinellem Lernen ("Machine Learning"; ML) basieren, insbesondere Deep-Learning-Techniken, welche künstliche neuronale Netze (KNN) einsetzen. Wenn hierin von künstlicher Intelligenz (KI) die Rede ist, bezeichnet dies Methoden des maschinellen Lernens (ML), vorzugsweise des Deep-Learning. Die derzeit am meisten genutzte Variante, eine KI zu trainieren, ist das sogenannten "überwachte Lernen" ("supervised learning"). Dabei wird die KI anhand von Trainingsdaten auf ein oder mehrere bestimmte Ziele oder Aufgabenstellungen hin trainiert. Der KI werden zum Trainieren daher Kombinationen aus Trainingsbildern und dem zugehörigen Ergebnis vorgelegt, auf das die KI trainiert werden soll, d. h. einer Musterlösung ("Labels", "Annotationen", "Ground Truth") für die anhand der Bilder zu lösende Aufgabe. Diese Kombination aus Trainingsbildern und Musterlösungen ermöglicht es der KI, die ihr gestellte Aufgabe zu erlernen, ihre Ergebnisse zu überprüfen, zu korrigieren und so ein erfolgreiches Training zu durchlaufen.

Die Aufgaben, auf die eine KI im Bereich der Bildanalyse trainiert werden kann, können vielfältig sein, wobei das Verfahren in der Regel immer auf einer Klassifikation beruht, bei der die KI verschiedenen Strukturen innerhalb der erhaltenen Bilddaten jeweils vorher festgelegten Klassen zuordnet. Die Zuordnung einer Klasse basiert auf den Musterlösungen der Trainingsbilddaten, welche bereits die Klassifizierung der Trainingsbilddaten enthalten und mit denen das System im Vorfeld trainiert wurde.

Um solche KI-Systeme auf die Bilderkennung und -auswertung zu trainieren, werden viele Trainingsbilder einschließlich der Musterlösungen ("Labels", "Annotationen") benötigt, die für die jeweilige Aufgabe der Merkmalserkennung repräsentativ sind. Je komplexer und vielfältiger die realen Bilder im interessierenden Bereich sind, desto mehr Trainingsdaten werden benötigt, damit die KI gute Ergebnisse erzielen kann, wie z. B. bei der Bildanalyse von medizinischen oder biologischen Proben. In vielen Anwendungen basieren die KI-Trainingsbilder auf realen Bildern, und die Musterlösung muss mit erheblichem menschlichem Aufwand manuell erstellt werden, indem die relevanten Merkmale zunächst korrekt klassifiziert und markiert werden, sog. "Labels" oder "Annotationen". Dies macht die Bereitstellung von Trainingsdaten kostspielig und zeitaufwendig. Darüber hinaus ist sie fehleranfällig und in hohem Maße subjektiv.

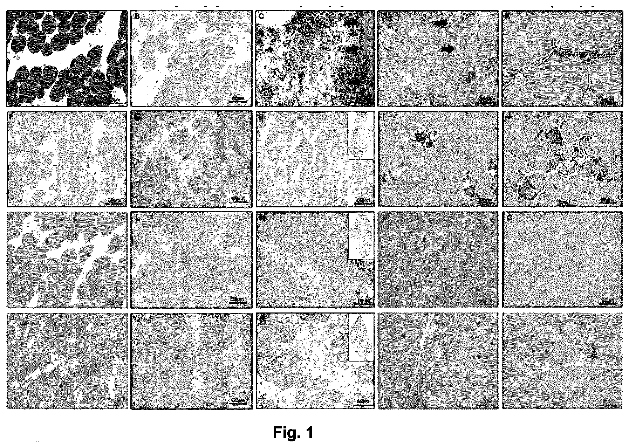

Als Beispiel für die Komplexität biomedizinischer Mikroskopiebilder zeigt Figur 1 lichtmikroskopische Hellfeldaufnahmen von mit Hämatoxylin und Eosin (H&E) gefärbten und FFPE-präparierten (FFPE = Formalin-fixiert und Paraffin-eingebettet) Muskelgewebeschnitten (hier grau skaliert), die die Vielfalt biomedizinischer Bilder für einen exemplarisch ausgewählten Gewebetyp veranschaulichen. Aufgrund der Vielfalt der Zell- und Gewebetypen sind die heutigen modernen Kl-basierten Bildanalyselösungen in der diagnostischen und biomedizinischen Bildgebung hochspezialisiert und erfordern große Mengen an Trainingsdatensätzen aus klinischen Quellen. Das Bereitstellen von aussagekräftigen Trainingsbildern und deren manuelle Bearbeitung durch Annotation, um auch entsprechende Musterlösungen zu erhalten, stellt für das Trainieren von KI nach wie vor ein Schlüsselproblem dar.

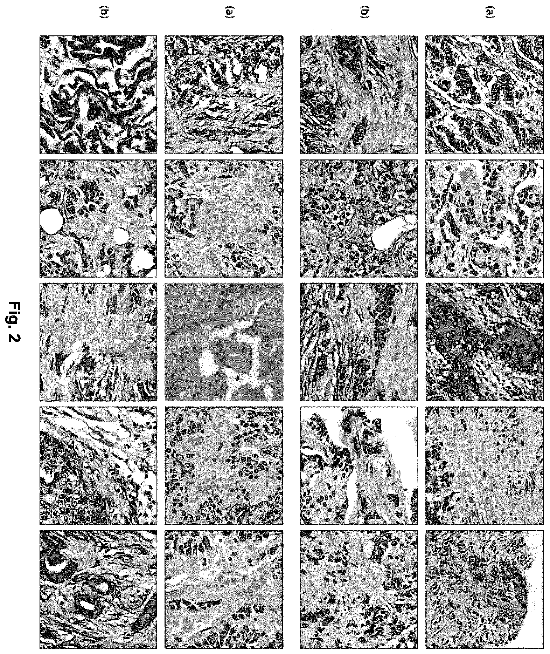

Angesichts der Problematik, eine ausreichend große Anzahl an geeigneten Trainingsbildern bereitzustellen, die aus realen Bildquellen stammen, wurden einige Ansätze für die Erzeugung mehr oder weniger realistischer synthetischer Bilder vorgeschlagen. Zu den erfolgreichsten gehören die so genannten Generative Adversarial Networks (GANs), die in der Lage sind, realistisch erscheinende synthetische Bilder von hoher Qualität zu erzeugen, wenn sie mit großen Mengen nicht markierter (annotierter) Daten trainiert werden. In diesem Zusammenhang wurde eine Methode namens PathologyGAN vorgeschlagen, die realistisch erscheinende Bilder von H&E-gefärbtem Brustkrebsgewebe erzeugen können. Figur 2 (a) zeigt mit PathologyGAN synthetisch erzeugte H&E-Brustkrebsgewebebilder (hier grau skaliert) im direkten Vergleich zu realen Bildern in Figur 2 (b). Obwohl die generierten Bilder von hoher Qualität sind, sehr realistisch erscheinen und verschiedene Merkmale (Gewebe, Kerne, Zellen) enthalten, die auch in realen Bildern vorhanden sind, ist die Verwendung der GAN-Technologie zur Lösung des Datenproblems aus mehreren Gründen noch sehr begrenzt. GANs basieren auf tiefen künstlichen neuronalen Netzen (deep artificial neural networks; DNN), die aufgrund der schlechten Interpretierbarkeit ihrer internen Struktur als Black-Boxen betrachtet werden und es daher nicht möglich ist, GANs genau zu steuern, um ein bestimmtes und gewünschtes Ergebnis zu erzielen. Darüber hinaus werden für das Training von GANs große Mengen an realen Bilddaten benötigt, was wiederum mit der oben beschriebenen Problematik der Bereitstellung solcher realer Bilder einhergeht. Schließlich werden von GANs keine Musterlösungen ("Labels", "Annotationen", "Ground Truth") bereitgestellt, wie sie für das überwachte Lernen von KI-Systemen für die quantitative Bildanalyse benötigt werden.

Computerimplementierte Verfahren zur Erzeugung synthetischer Bilder, die für das Training künstlicher Intelligenz (KI) geeignet sein können, beschreiben auch Trampert, Patrick et al., "Deep Neural Networks for Analysis of Microscopy Images - Synthetic Data Generation and Adaptive Sampling", Crystals, Bd. 11, 258, 2021, S. 1-13, Malm, Patrik et al.: "Simulation of Bright-Field Microscopy Images Depicting Pap-Smear Specimen", Cytometry, Bd. 87A, 2015, S. 212-226, sowie Mill, Leonid et al., "Synthetic Image Rendering Solves Annotation Problem in Deep Learning Nanoparticle Segmentation", Small Methods, November 2020, S. 1-45.

### AUFGABE DER ERFINDUNG

Die Aufgabe der vorliegenden Erfindung bestand daher darin, ein Verfahren und ein System zur Verfügung bereitzustellen, welches die Nachteile der Methoden des Standes der Technik überwindet und in steuerbarer Weise und effizient synthetische Trainingsdaten für das überwachte Lernen von KI-Systemen generiert, insbesondere synthetische Trainingsdaten mikroskopischer Aufnahmen von Zellen umfassendem oder anderem biologischem Material.

### BESCHREIBUNG DER FIGUREN

- Figur 1: zeigt mikroskopische Hellfeldbilder von Hämatoxylin und Eosin (H&E) gefärbten Muskelgewebeschnitten (hier grau skaliert).
- Figur 2: zeigt synthetische (a) vs. reale (b) H&E gefärbte Brustkrebsgewebebilder, wobei die synthetischen Bilder von PathologyGAN generiert wurden (hier grau skaliert).

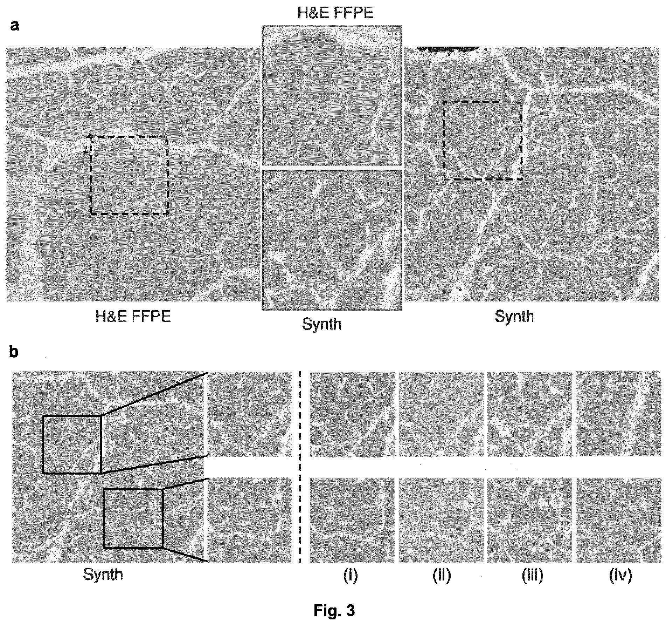

- Figur 3a:: zeigt links ein reales mikroskopisches Hellfeldbild von H&E-gefärbten und FFPE-präparierten Skelettmuskelfasern ("H&E FFPE") im Vergleich zu einem rechts wiedergegebenen synthetischen Bild ("Synth"), das mit der Methode der vorliegenden Erfindung erzeugt wurde (hier grau skaliert). Ausschnittsvergrößerungen der in den jeweiligen Bildern durch unterbrochene Linien dargestellten Bereiche sind in der Mitte wiedergegeben.
- Figur 3b:: zeigt links der unterbrochenen Linie das mit der Methode der vorliegenden Erfindung erzeugte synthetische mikroskopische Hellfeldbild aus Figur 3a ("Synth") sowie Ausschnittsvergrößerungen davon und rechts der unterbrochenen Linie unterschiedlich prozessierte Varianten der jeweiligen Ausschnittsvergrößerungen: (i) = Variation der Färbung; (ii) Überlagerung bzw. Ergänzungen in der Form von linienförmigen Schnittartefakten in den Fasern; (iii) Variation der Faserformen (im Vergleich zu den Originalausschnitten haben die Fasern eine eher degenerierte und komplexere geometrische Form); (iv) Variation des Bindegewebes und der Zellkerne (im Vergleich zu den Originalausschnitten sind mehr und größere Zellkerne vorhanden und das grobe Bindegewebe hat eine andere Größe und ist anders positioniert).

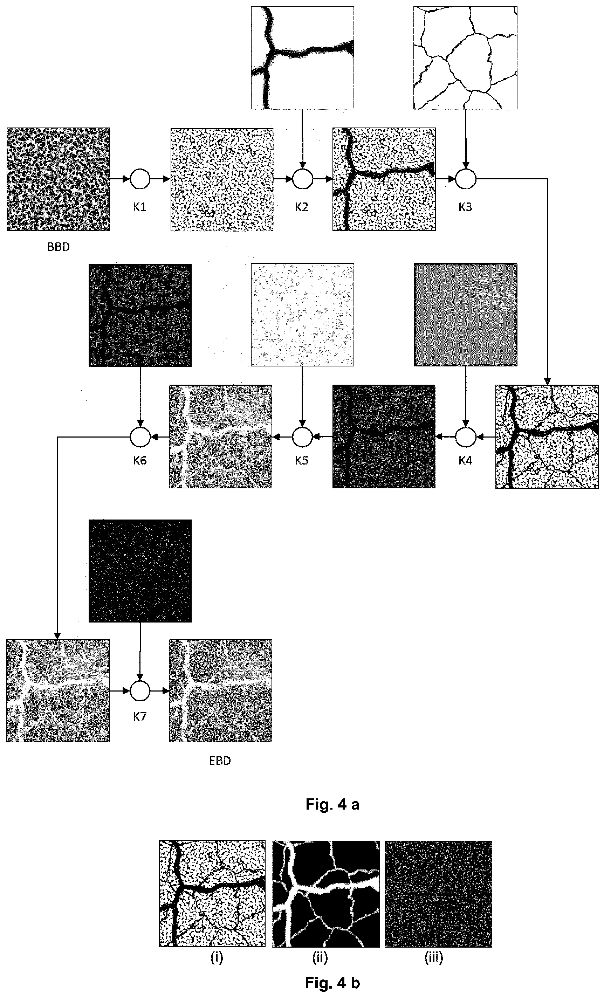

- Figur 4a: zeigt ein Beispiel der prozeduralen Generierung eines Endbilddatensatzes (EBD) eines synthetischen Hellfeldbildes von H&E-gefärbten Muskelfasern nach dem Verfahren der vorliegenden Erfindung, ausgehend von einem Basisbilddatensatz (BBD) über eine Pipeline von Umrechnungsknoten (K1, K2, K3...), einschließlich der Hellfeldbilder der an den Umrechnungsknoten erzeugten Folgebilddatensätze.
- Figur 4b: zeigt beispielhaft drei verschiedene Segmentierungsmasken als mögliche Musterlösungen unterschiedlicher Klassen des Endbilddatensatzes (EBD) aus Figur 4a: (i) binäre Segmentierungsmaske der Muskelfasern; (ii) binäre Segmentierungsmaske des groben Bindegewebes; (iii) binäre Segmentierungsmaske der Zellkerne.

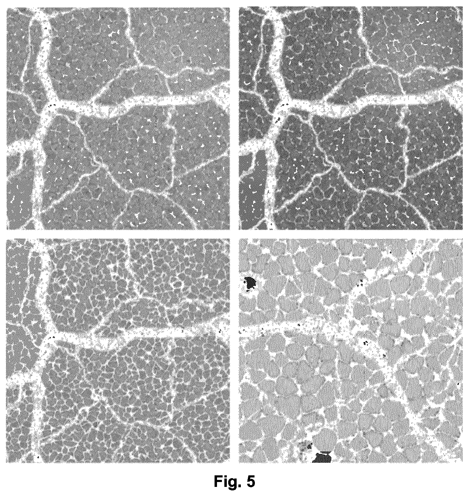

- Figur 5: zeigt synthetische, aber fotorealistische Hellfeldbilder (hier grau skaliert) von H&E-gefärbten Skelettmuskelfasern, die mit einer prozeduralen Pipeline gemäß der vorliegenden Erfindung erzeugt wurden. Mit dem erfindungsgemäßen Verfahren ist es möglich, verschiedene Aspekte des Bildes automatisch zu verändern und zu kontrollieren, während gleichzeitig das inhärente Muskelfasermuster erhalten bleibt. Während die beiden oberen Bilder in Figur 5 unterschiedliche Charakteristika der H&E-Färbung wiedergeben, zeigen die beiden unteren Bilder in Figur angepasste Faserformen, -größen und -verteilungen, indem nur einzelne Parameter der prozeduralen Texturierungspipeline verändert wurden.

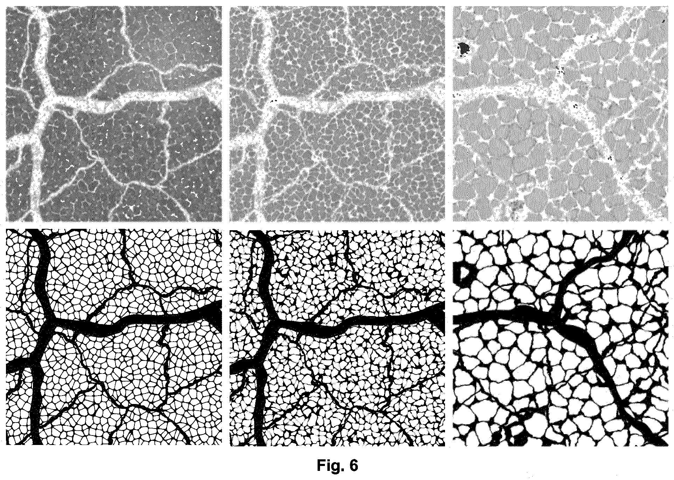

- Figur 6: zeigt in der oberen Reihe synthetische fotorealistische Bilder von Muskelfasern aus Figur 5 (hier grau skaliert) und in der unteren Reihe ihre jeweiligen synthetisch erzeugten (hier binären) Segmentierungsmasken, die als Musterlösungen für das Trainieren eines KI-Systems auf das Segmentieren von Muskelfaserbildern dienen.

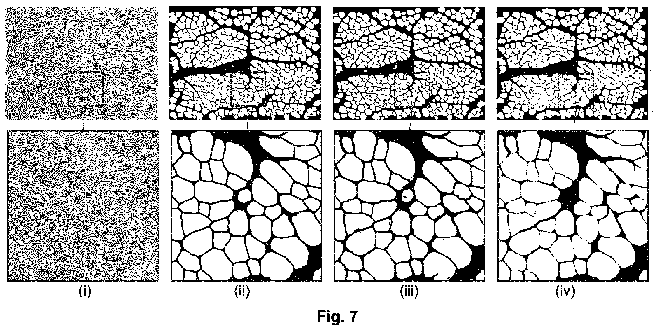

- Figur 7:: zeigt bei (i) in der oberen Reihe ein reales mikroskopisches Hellfeldbild von H&E-gefärbten und FFPE-präparierten Skelettmuskelfasern und darunter eine Ausschnittsvergrößerung des im oberen Bild durch unterbrochene Linie dargestellten Bereichs (hier grau skaliert). Die Bilder bei (ii), (iii) und (iv) zeigen zugehörige binäre Segmentierungsmasken, in denen Faserquerschnitte weiß und Hintergrund (Bindegewebe, Zellzwischenräume etc.) schwarz wiedergegeben sind. Die Segmentierungsmasken (ii) wurden von einer KI generiert, welche ausschließlich mit realen Muskelfaserschnittbildern und zugehörigen manuell annotierten Segmentierungsmasken als Musterlösungen trainiert wurde, wobei das reale Schnittbild (i) ein Testbild zur Überprüfung der KI ist, das nicht unter den Trainingsdaten war. Die Segmentierungsmasken (iii) wurden von einer KI generiert, welche ausschließlich mit synthetisch nach der vorliegenden Erfindung generierten Muskelfaserschnittbildern und zugehörigen Segmentierungsmasken trainiert wurde. Die Darstellungen bei (iv) zeigen von einem Experten manuell durchgeführte Annotationen des realen Testbildes (i). Erkennbar ist die von der ausschließlich mit synthetisch erzeugten Bildern trainierten KI erzeugte Segmentierung derjenigen von der ausschließlich mit realen Bildern trainierten KI qualitativ mindestens gleichwertig, während in der von einem Experten durchgeführten manuellen Annotation wenigstens eine Zelle übersehen wurde.

### BESCHREIBUNG DER ERFINDUNG

Die Aufgabe der vorliegenden Erfindung wird gelöst durch ein computer-implementiertes Verfahren zur Erzeugung synthetischer Bilder, welche mikroskopische Aufnahmen eines biologischen Materials repräsentieren, sowie zu jedem synthetischen Bild wenigstens einer Musterlösung für das Trainieren einer künstlichen Intelligenz (Kl) mit den Schritten, in denen man
- mittels Algorithmen einen zwei-dimensionalen Basisbilddatensatz unter Nutzung simulativer Verfahren erzeugt oder bereitstellt, welcher Bilddaten und Koordinatendaten von Grundstrukturen biologischen Materials umfasst, wobei jeder Bildpunkt in den Bild- und Koordinatendaten des Basisbilddaten-satzes mit einer Information über seine Position im zweidimensionalen Raum, seine Farbe und seine Klassenzuordnung verknüpft ist,
- den Basisbilddatensatz einer Pipeline, d.h. einer Abfolge von Umrechnungsknoten zuführt, wobei jeder Umrechnungsknoten einen parametrischen Algorithmus umfasst, welcher dafür ausgelegt ist, durch prozedurale Generierung einen Folgebilddatensatz zu erzeugen, indem durch Umrechnung der Bilddaten und/oder Koordinatendaten mindestens ein Merkmal des dem Algorithmus zugeführten Bilddatensatzes verändert oder hinzugefügt wird, wobei Bildpunkte neue Farbinformationen und/oder neue Koordinatendaten und/oder eine neue Klassenzuordnung erhalten können,
   wobei jeder parametrische Algorithmus mindestens einen Parameter umfasst, welcher innerhalb eines Wertebereichs variierbar ist, um die Veränderung des Merkmals im zugeführten Bilddatensatz bei der Umrechnung der Bilddaten und/oder Koordinatendaten zu steuern, und
   wobei, ausgehend vom Basisbilddatensatz, jeder Folgebilddatensatz in der Pipeline (Abfolge) von Umrechnungsknoten sequentiell weiteren Umrechnungsknoten zugeführt wird, um einen Endbilddatensatz zu erzeugen, welcher ein synthetisches Bild einer mikroskopischen Aufnahme eines biologischen Materials repräsentiert,
- mittels wenigstens eines weiteren Algorithmus zu dem Endbilddatensatz oder einem dem Endbilddatensatz in der Pipeline vorausgegangenen Folgebilddatensatz wenigstens eine Musterlösung erzeugt.

Das Verfahren der vorliegenden Erfindung ist aufgrund der erfindungsgemäßen Pipeline von parametrischen Algorithmen, die auf die Bilddatensätze angewendet werden, in der Lage und geeignet, synthetische Bilder zu erzeugen, die die Charakteristika des gewünschten biologischen Materials aufweisen und in fotorealistischer Weise wiedergeben und daher von realen Bildern nicht oder kaum zu unterscheiden sind. Gleichzeitig liefert das Verfahren zu einem synthetischen Bild wenigstens eine Musterlösung für eine Aufgabe, auf welche eine KI mittels der Kombination aus synthetischem Bild und Musterlösung im Wege des "überwachten Lernens" trainiert werden kann.

In einer bevorzugten Ausführungsform der Erfindung handelt es sich bei den erfindungsgemäß erzeugten synthetischen Bildern um solche, welche mikroskopische Aufnahmen eines biologischen Materials repräsentieren, wie beispielsweise Bilder von Muskelschnitten, Gewebeschnitten, Gefäßschnitten, Bakterien, Zellkulturen etc.

Das erfindungsgemäße Verfahren hat eine Vielzahl von Vorteilen gegenüber bekannten Verfahren zur Bereitstellung von Trainingsdaten für das überwachte Lernen von KI-Systemen. Anders als beispielsweise bei GANs, benötigt das System nicht eine Vielzahl realer Bilder des interessierenden Materials, um eine große Bandbreite fotorealistischer Bilder zu erzeugen. Somit entfällt der Aufwand des Sammelns und Bereitstellens einer großen Anzahl realer Bilder, beispielsweise aus klinischen Quellen. Da die Funktionen der parametrischen Algorithmen an den Umrechnungsknoten und die jeweiligen Parameterwerte bekannt sind, lässt sich in dem erfindungsgemäßen Verfahren eine für das Trainieren der KI auf bestimmte Aufgabenstellungen geeignete Musterlösung zu einem Bilddatensatz direkt in der Pipeline erzeugen. Es ist daher nicht erforderlich, die generierten synthetischen Trainingsbilder manuell zu klassifizieren und zu annotieren, um eine Musterlösung (Ground Truth) zu erzeugen, die für das überwachte Lernen von KI erforderlich ist, wie es bei realen Bildern oder beispielsweise bei mittels GANs erzeugten synthetischen Bildern notwendig ist und sehr hohen Aufwand bedeutet.

Bei dem erfindungsgemäßen Verfahren wird in einem ersten Schritt ein zwei-dimensionaler Basisbilddatensatz erzeugt oder bereitgestellt, welcher der Pipeline von Umrechnungsknoten zugeführt wird, in welcher er dann durch die parametrischen Algorithmen sequentiell durch Umrechnung der Bilddaten und/oder Koordinatendaten verändert wird. Durch prozedurale Generierung wird ein Folgebilddatensatz bzw. eine Vielzahl von Folgebilddatensätzen erzeugt. Im Ergebnis werden ein synthetisches Trainingsbild und wenigstens eine dazu passende Musterlösung erhalten. Die parametrischen Algorithmen sind dafür ausgelegt, bestimmte Merkmale des Basisbilddatensatzes bzw. der in der Pipeline daraus folgenden Folgebilddatensätze derart zu verändern, dass im Wege der prozeduralen Generierung ein Endbilddatensatz erhalten wird, der ein reales Bild des interessierenden biologischen Materials, auf das die KI trainiert werden soll, repräsentieren kann, beispielsweise eine lichtmikroskopische Aufnahme eines Muskelfaserschnitts, eines Abstrichs oder ähnlichem.

Um dieses Ziel zu erreichen, umfasst der Basisbilddatensatz bereits Bilddaten und Koordinatendaten von Grundstrukturen des interessierenden biologischen Materials. In Kenntnis des interessierenden Materials ist es für den Fachmann einfach, solche Grundstrukturen in die Bilddaten und Koordinaten des Basisbilddatensatzes aufzunehmen bzw. zu implementieren. Der Basisbilddatensatz kann manuell oder selbst auch wieder mittels Algorithmen erzeugt werden, wie beispielsweise eine Voronoi-Struktur, die sich im Sinne der Erfindung z.B. als Basisbilddatensatz für die Erzeugung synthetischer Bilder eignet, welche mikroskopische Aufnahmen von Muskelzellschnitten oder anderen zellulären Strukturen repräsentieren. Bereits einfache geometrische Grundmuster, wie Rechtecke, Ellipsen, Kreise etc. können einen Basisbilddatensatz liefern, soweit sie Grundstrukturen des interessierenden biologischen Materials imitieren. Die Auswahl eines Grundmusters für die Erzeugung eines Basisbilddatensatzes ergibt sich für den Fachmann aus der Kenntnis des typischen visuellen Erscheinungsbildes des interessierenden biologischen Materials z.B. anhand realer Referenzbilder. Eine weitere Möglichkeit zur Bereitstellung eines Basisbilddatensatzes ist die Nutzung bekannter simulativer Verfahren, wie Cellular Automata oder Reaction Diffusion, welche darauf ausgelegt sind, mittels einfacher Gesetzmäßigkeiten Grundmuster biologischer Systeme zu simulieren.

Auf der Grundlage des für ein bestimmtes interessierendes biologisches Materials eingesetzten Basisbilddatensatzes werden durch die erfindungsgemäß angewendeten parametrischen Algorithmen an den Umrechnungsknoten der Pipeline Folgebilddatensätze und schließlich ein Endbilddatensatz erzeugt, der ein synthetisches Bild einer mikroskopischen Aufnahme des interessierenden biologischen Materials repräsentiert. Die parametrischen Algorithmen sind dafür ausgelegt, dass bei der Umrechnung Gesetzmäßigkeiten und Muster des jeweiligen interessierenden biologischen Materials bzw. wie eine Probe typischerweise erscheint (z.B. ein gefärbter mikroskopischer Schnitt) angewendet werden. Durch den prozeduralen und parametrischen Charakter der Simulation lassen sich dabei auch synthetische Bilder erzeugen, die bei dem interessierenden biologisches Material in der Realität selten oder möglicherweise nie vorkommen, was aber für das Trainieren einer KI jedoch unschädlich ist.

Am Beispiel eines Muskelzellschnitts erläutert, umfasst ein Basisbilddatensatz zwei-dimensionale Bilddaten und Koordinaten der zellulären Grundstrukturen und ihrer Positionen, wie beispielsweise Positionen von Zellkernen, Erstreckungen der Zellen um den Kern bis zur Zellwand bzw. den Fasergrenzen sowie Abstände der Zellen untereinander. Auch umliegendes Gewebe und Gewebeartefakte können in den Bilddaten und Koordinaten des Basisbilddatensatzes berücksichtigt werden. Ausgehend von den Bilddaten und Koordinaten einer derart einfachen Basisstruktur, die noch kein realistisches Bild eines Muskelfaserschnittes repräsentiert, werden die Bilddaten und Koordinatendaten durch die parametrischen Algorithmen an den Umrechnungsknoten verändert und überlagert und so erst ein Endbilddatensatz erhalten, der einem realistischen Bild eines Muskelfaserschnittes entsprechen kann.

Beispiele für Veränderungen und Überlagerungen an den Umrechnungsknoten umfassen beispielsweise Skalierungen, d. h. Veränderungen der Größen bestimmter Strukturen durch Umrechnung ihrer Koordinaten im zwei-dimensionalen Raum, z.B. Änderung der Größen der Zellen, der Zellkerne, der Abstände zwischen den Zellen bzw. der Ausdehnung des Bindegewebes zwischen den einzelnen Zellen.

Wenn hierin von Veränderungen und Überlagerungen der Bilddaten und/oder Koordinatendaten des Basisbilddatensatzes oder von Folgebilddatensätzen die Rede ist, umfasst dies somit auch das Hinzufügen bzw. Überlagern von Bild- und Koordinatendaten eines parametrisch erzeugten weiteren Bildes im Sinne einer Maske, welche bestimmte Strukturen, Formen, Farben, Texturen etc. des interessierenden biologischen Materials umfasst. Beispielsweise kann den Bild- und Koordinatendaten eines Bilddatensatzes, der nur Grundmuster von einfachen im zwei-dimensionalen Raum angeordneten Zellstrukturen enthält, ein Muster in Form einer Maske hinzugefügt bzw. überlagert werden, welches Grundstrukturen von grobem Bindegewebe, Blutgefäßen, Präparationsartefakten etc. hinzufügt.

Jeder Bildpunkt ist bereits in den Bild- und Koordinatendaten des Basisbilddatensatzes, wie auch in den an den Umrechnungsknoten erzeugten Folgebilddatensätzen mit einer Information über seine Position im zweidimensionalen Raum, seine Farbe und auch seine Klassenzuordnung (z. B. Zellkern, Fasergrenze etc.) verknüpft. Diese Bild- und Koordinatendaten eines jeden Bildpunktes können an den Umrechnungsknoten durch den angewendeten parametrischen Algorithmus verändert werden. So kann sich durch Veränderungen und Überlagerungen an den Umrechnungsknoten auch die Klassenzuordnung eines Bildpunkts ändern. Beispielsweise kann ein Bilddatensatz zunächst nur Daten zu bestimmten Strukturen bzw. Klassen umfassen, z.B. nur Zellkerne und Fasergrenzen, und durch Überlagerung mit Daten einer weiteren Klasse, z.B. Bindegewebe, in einen Folgebilddatensatz überführt werden, der eine oder mehrere weitere Klassen aufweist. Bildpunkte einer bestimmten Klassenzugehörigkeit können dann an den Umrechnungsknoten neben neuen Farb- und Koordinateninformationen auch eine neue Klassenzugehörigkeit erhalten.

Weitere Beispiele für Veränderungen betreffen die durch Koordinaten definierten Positionen der Zellen oder bestimmter Strukturen zueinander, wodurch sich beispielsweise Gruppierungen, Anhäufungen oder Cluster von Zellen darstellen lassen, welche durch Bindegewebsstrukturen o.ä. voneinander separiert sind, wie es in natürlichem Gewebe ebenfalls vorkommt. Auch die Positionen der Zellkerne oder anderer Organellen innerhalb der Zellen können verändert werden.

Weitere Veränderungen an den Umrechnungsknoten betreffen beispielsweise unterschiedliche Färbungen und Texturen, die durch Variation bestimmter Farbwerte, durch das Einbringen von Rauschen oder durch verschiedene Überlagerungen generiert werden können. In diesem Zusammenhang sind parametrische Algorithmen der Erfindung auch dafür ausgelegt, Randomisierungen vorzunehmen, um innerhalb vorgegebener Bereiche zufallsgesteuerte Variationen einzubringen, beispielsweise im Zusammenhang mit Texturen. Auch die Glattheit (smoothness) oder Krümmungen bestimmter Strukturen kann durch die parametrischen Algorithmen bestimmt werden, beispielsweise die Glattheit oder Krümmung der Zellwand im Querschnitt einer Zelle oder sonstiger Grenzflächen.

Einen erfindungsgemäß geeigneten und vorteilhaften Basisbilddatensatz für ein biologisches Material mit zellulären Strukturen stellen beispielsweise Bilddaten und Koordinaten eines Voronoi-Diagramms dar. Das Voronoi-Diagramm ist allgemein bekannt u.a. zur Modellierung zellulärer und anderer biologischer Strukturen, aber auch für Simulationen in vielen anderen Bereichen. Die Erstellung eines Voronoi-Diagramms basiert auf einer Anzahl von Punkten (Seeds), die in einer Ebene verteilt sind. Ausgehend von diesen Punkten werden durch bestimmte Algorithmen Flächen in der Ebene erzeugt, beispielsweise direkt durch Anwendung des Fortune-Algorithmus oder indirekt, z. B. ausgehend von einer Delaunay-Triangulation, durch Ermittlung ihres Duals.

Die Bilddaten und Koordinaten eines solchen Voronoi-Diagrams sind geeignet, als Basisbilddatensatz eines Zellen umfassenden biologischen Materials im Sinne der Erfindung zu dienen, wobei die Ausgangspunkte (Seeds) des Voronoi Zellkerne und die darum entwickelten Flächen Querschnitte des Zytoplasmas und der Zellwände repräsentieren können und damit eine Grundstruktur für das interessierende Zellen umfassende biologische Material darstellen.

In einer Ausführungsform des erfindungsgemäßen Verfahrens wird eine Musterlösung mittels wenigstens einem weiteren Algorithmus von dem in einem Durchlauf durch die Pipeline generierten Endbilddatensatz erzeugt. Alternativ oder ergänzend kann die Musterlösung auch von einem dem Endbilddatensatz in der Pipeline vorausgegangenen Folgebilddatensatz erzeugt werden. Dies ist beispielsweise dann vorteilhaft, wenn die weiteren Umrechnungen bzw. Veränderungen des hierfür ausgewählten Folgebilddatensatzes bis zum Endbilddatensatz keinen Einfluss mehr auf die Musterlösung haben, die Musterlösung für den ausgewählten Folgebilddatensatz also die gleiche wäre wie für den Endbilddatensatz. Dies kann beispielsweise dann der Fall sein, wenn sich die Musterlösung auf die Anordnung, Größe oder Form bestimmter zellulärer Strukturen bezieht, wie z.B. der Zellkerne, der Zellwände etc., die weiteren Umrechnungen in der Pipeline aber Parameter betreffen, die diese Merkmale der zellulären Strukturen unberührt lassen. Solche Parameter können beispielsweise die in der realen Mikroskopie angewendete Färbung (z.B. H&E-Färbung) der simulierten Bilder, bestimmte Charakteristika des zwischen den Zellen angeordneten Bindegewebes etc. sein. Da die parametrischen Algorithmen und deren Abfolge innerhalb der Pipeline bekannt sind, lässt sich ohne weiteres steuern, ob Umrechnungsknoten zwischen einem bestimmten Folgebilddatensatz und dem Endbilddatensatz noch Einfluss auf die Musterlösung haben oder nicht, was wiederum von der Art der gewünschten Musterlösung abhängt. Auf diese Weise lassen sich viele unterschiedlich erscheinende synthetische Trainingsbilder erzeugen, beispielsweise mit unterschiedlichen Färbungen, Texturen etc., die aber alle die gleiche Musterlösung haben, wodurch die Leistung der zu trainierenden KI gegenüber bekannten Verfahren sehr effizient gesteigert werden kann. Bei den bisherigen Verfahren war es erforderlich, zu jedem Trainingsbild, sei es ein reales oder ein synthetisch mittels GANs erzeugtes, mit hohem Annotationsaufwand eine eigene Musterlösung zu generieren.

In einer bevorzugten Ausführungsform der Erfindung sind Musterlösungen Segmentierungsmasken. Bei einer Segmentierungsmaske handelt es sich um ein von dem synthetischen Trainingsbild bzw. von dem generierten Bilddatensatz abgeleitetes Bild, bei dem bestimmte interessierende Strukturen einer Klasse durch eine definierte Farbe bzw. einen Klassenindex und ggf. andere ebenfalls interessierende Strukturen einer weiteren Klasse durch eine andere Farbe bzw. Klassenindex wiedergegeben sind. Durch die Segmentierung bestimmter Strukturen in einem realen oder real erscheinenden synthetischen Bild kann die KI im Training zusammen mit der Musterlösung erlernen, solche Strukturen in Bildern zu identifizieren und auszuwerten. Unterschiedliche Farben in Segmentierungsmasken dienen primär der visuellen Darstellung. Für das Trainieren einer KI genügt es, wenn jedem Bildpunkt anstelle einer Farbe ein die Klasse repräsentierender Wert als Klassenindex zugeordnet ist, z.B. Hintergrundpixel: 0, Faserpixel: 1, Bindegewebe: 2, etc. Wenn hierin von Farben der Segmentierungsmaske die Rede ist, so umfasst dies auch die Verwendung von Klassenindizes.

Am Beispiel des mikroskopischen Schnittes von Muskelfasern können interessierende Strukturen beispielsweise die Muskelfaser selbst, Zellkerne und Blutgefäße oder Bindegewebsstrukturen sein und jeweils eine eigene Klasse darstellen. In einer Segmentierungsmaske können diese Strukturen bzw. Klassen dann in jeweils unterschiedlichen Farben und der Hintergrund in einer weiteren Farbe wiedergegeben sein. Einfache (binäre) Segmentierungsmasken geben nur eine interessierende Struktur bzw. Klasse in einer bestimmten Farbe und den Rest als Hintergrund in einer weiteren Farbe wieder.

Figur 6 zeigt ein Beispiel für Trainingsbilder und zugehörige Segmentierungsmasken, wobei in der oberen Reihe mit dem erfindungsgemäßen Verfahren erzeugte fotorealistische synthetische Bilder von Muskelfasern (hier grau skaliert) wiedergegeben sind und in der unteren Reihe zugehörige binäre Segmentierungsmasken, wobei darin nur die Querschnitte der Muskelfaserzellen insgesamt als interessierende Struktur bzw. Klasse weiß und alle anderen Strukturen als Hintergrund schwarz wiedergegeben sind. Mit den hier gezeigten synthetischen Bildern von Muskelfaserschnitten und den zugehörigen Segmentierungsmasken als Musterlösungen kann eine KI beispielsweise darauf trainiert werden, reale lichtmikroskopische Aufnahmen von Muskelfaserschnitten hinsichtlich der Querschnitte der Muskelfaserzellen zu analysieren und davon entsprechende Lösungen bzw. Segmentierungen zu generieren. Anhand dieser Lösungen bzw. Segmentierungen können dann verschiedenste Auswertungen vorgenommen werden, wie beispielsweise eine Bestimmung der Anzahl von Muskelfasern pro Fläche, ihrer Durchmesser bzw. Querschnittsflächen, ihrer Formen bzw. Längen-zu-Breiten-Verhältnisse, ihrer Abstände untereinander, der Clusterbildung von Muskelfaserzellen, etc. Je nach der beabsichtigten Aufgabe der zu trainierenden KI können zusätzliche oder auf andere Merkmale ausgerichtete Segmentierungsmasken als Musterlösungen erzeugt werden, z.B. durch Segmentierung anderer zellulärer Strukturen, wie Zellkerne, Zellorganellen etc., oder Strukturen des Bindegewebes zwischen den Zellen. Wie oben ausgeführt, können aber auch innerhalb einer Segmentierungsmaske gleichzeitig verschiedene Merkmale bzw. interessierende Strukturen oder Klassen durch unterschiedliche Farben markiert werden.

Da Segmentierungsmasken Pixel-genaue Klassifizierungen der Strukturen eines Bildes sind, kann eine KI in Verbindung mit dem zugehörigen realistisch erscheinenden Trainingsbild, sei es von einer realen Probe erhalten oder synthetisch generiert, trainiert werden, jeden einzelnen Bildpunkt einer Klasse zuzuordnen und dies dann auch auf ein Realbild anzuwenden, woraus wiederum statistische oder andere Informationen abgeleitet werden können. Diese Informationen können dann verwenden werden, um beispielsweise pathologische Zustände festzustellen oder den Einfluss von Krankheiten, Medikamenten, Umgebungseinflüssen oder medizinischen Behandlungsmethoden auf bestimmte biologische Materialien oder Organismen zu bestimmen.

Beispielsweise wird in der Muskelpathologie der prozentuelle Anteil von im Querschnitt der Muskelfasern zentral gegenüber dezentral in der Faser angeordneten Zellkernen als ein Indikator für bestimmte pathologische Zustände des untersuchten Gewebes angesehen. Die manuelle mikroskopische Untersuchung und Auswertung von Muskelzellschnitten hinsichtlich beispielsweise der Zellkernlage in den Fasern ist äußerst zeit- und personalaufwendig und ungenau. Eine mittels entsprechend ausgelegter Segmentierungsmasken trainierte KI kann diese Aufgabe wesentlich effektiver und zudem genauer ausführen. Darüber hinaus können solche Kl-gestützten Auswertungen aufgrund der damit erreichbaren hohen Durchsätze sehr vieler Proben zusätzlich relevante statistische Informationen liefern.

Die vorliegende Erfindung umfasst neben Segmentierungsmasken auch andere Formen von Musterlösungen, je nach der Art der Aufgabe, auf welche eine KI trainiert werden soll. Da die Musterlösung aus den vorhandenen und somit bekannten Bilddaten und Koordinaten der Strukturen des biologischen Materials generiert wird, können als Musterlösung - wiederum am Beispiel der Muskelschnitte - beispielsweise nur die x-y Positionen der Muskelfaserzentren oder der Zellkerne als Musterlösungen extrahiert werden. In diesem Fall wäre die Musterlösung keine Segmentierungsmaske, sondern eine Liste von Vektorkoordinaten, die der KI beim überwachten Lernen zusammen mit dem zugehörigen Trainingsbild zugeführt wird.

Ein weiteres Beispiel wäre, wenn man eine KI darauf trainieren möchte, unscharfe oder verschwommene Aufnahmen von biologischem Material, z.B. Muskelfasern, nachträglich zu schärfen. In diesem Fall wäre die Musterlösung ein nach dem erfindungsgemäßen Verfahren erzeugtes scharfes Bild, während das zugehörige Trainingsbild ein davon abgeleitetes und durch entsprechende Algorithmen (Filter) mit Unschärfe versehenes Bild wäre.

In ähnlicher Weise kann eine KI darauf trainiert werden, niedrig aufgelöste Bilder in hochaufgelöste Bilder zu konvertieren, um feine Strukturen hervorzuheben, ohne dass man hierfür zum Trainieren der KI reale niedrig- und hochaufgelöste Bildpaare aufnehmen muss. In diesem Fall wäre die Musterlösung ein nach dem erfindungsgemäßen Verfahren erzeugtes hoch auflösendes Bild, während das zugehörige Trainingsbild ein davon abgeleitetes Bild mit durch entsprechende Algorithmen erzeugter reduzierter Auflösung wäre.

In dem erfindungsgemäßen Verfahren generiert ein Durchlauf eines Basisbilddatensatzes durch die Pipeline von Umrechnungsknoten zunächst einen Endbilddatensatz und wenigstens eine zugehörige Musterlösung. Da für das Trainieren einer KI möglichst viele Trainingsbilder mit jeweiligen Musterlösungen benötigt werden, ist es zweckmäßig, das erfindungsgemäße Verfahren zur Erzeugung einer Mehrzahl voneinander verschiedener synthetischer Bilder und zugehöriger Musterlösungen von der Zuführung des Basisbilddatensatzes zur Pipeline von Umrechnungsknoten bis zum Erhalt des Endbilddatensatzes mehrfach unter Veränderung der Parameter der parametrischen Algorithmen an den Umrechnungsknoten durchzuführen. Mit Vorteil kann das erfindungsgemäße Verfahren somit sehr effektiv und im wesentlich nur abhängig von der verfügbaren Rechenleistung des eingesetzten Systems in sehr kurzer Zeit sehr viele Trainingsdatensätze zum Trainieren einer KI bereitstellen.

Das Variieren der Parameter der parametrischen Algorithmen an den Umrechnungsknoten kann automatisiert durch entsprechende Schleifen, welche die jeweiligen Parameterbereiche durchlaufen, erfolgen.

In einer Ausführungsform des erfindungsgemäßen Verfahrens zur Erzeugung einer Mehrzahl voneinander verschiedener synthetischer Bilder und zugehöriger Musterlösungen wird wenigstens ein in der Pipeline von Umrechnungsknoten erzeugter Folgebilddatensatz in einem Zwischendatenspeicher abgelegt und derselbe Folgebilddatensatz anschließend mehrfach weiteren Umrechnungsknoten zugeführt, welche in der Pipeline (Abfolge) dem Umrechnungsknoten, an welchem der im Zwischendatenspeicher abgelegte Folgebilddatensatz erzeugt wurde, nachgeordnet sind unter Veränderung der Parameter der parametrischen Algorithmen an diesen Umrechnungsknoten.

Auf diese Weise kann in dem System erhebliche Rechenleistung eingespart und die Permutation der Parameter der parametrischen Algorithmen an den Umrechnungsknoten noch effektiver ausgestaltet werden, indem erst ab einer Zwischenstufe die Parametervariation begonnen wird, um verschiedene Bilder zu erzeugen. Die für die Umrechnung vom Basisbilddatensatz bis zu dem an der Zwischenstufe erzeugten Folgebilddatensatz erforderliche Rechenleistung wird zunächst nur einmal benötigt. Wurden von dem an der Zwischenstufe abgelegten Folgebilddatensatz ausreichend verschiedene Datensätze durch nachfolgende Parametervariation erzeugt, kann eine weitere Variation durch Veränderung eines oder mehrerer Parameter an vorausgehenden Umrechnungsknoten wieder zu einem neuen Folgebilddatensatz führen, der wiederum zwischengespeichert und in gleicher Weise mehrfach weiteren Umrechnungsknoten zugeführt wird.

In einer weiteren Ausführungsform sind mehrere Zwischendatenspeicher in der Pipeline von Umrechnungsknoten vorgesehen, in denen jeweils Folgebilddatensätze abgelegt und mehrfach nachgeordneten Umrechnungsknoten unter Veränderung der Parameter der parametrischen Algorithmen an diesen Umrechnungsknoten zugeführt werden.

In einer bevorzugten Ausführungsform ist das erfindungsgemäße Verfahren zur Erzeugung synthetischer Trainingsbilder und zugehöriger Musterlösungen vorgesehen, um eine KI auf Bilder eines bestimmten Probentyps zu trainieren, für dessen Analyse die KI vorgesehen sein soll. Der Begriff "Probentyp" bezeichnet in diesem Zusammenhang mikroskopische Aufnahmen eines bestimmten biologischen Materials, beispielsweise eines bestimmten Gewebetyps, Zelltyps oder eines von einer bestimmten Lokalität entnommenen Abstrichs. Beispiele von Probentypen wären die bereits mehrfach genannten mikroskopischen Schnitte von Muskelzellen, aber auch Hautzellen, Nervenzellen oder Aufnahmen von kultivierten Zellen eines bestimmten Typs etc. Die KI soll bei dieser Variante des erfindungsgemäßen Verfahrens nicht dafür vorgesehen sein, einen bestimmten Probentyp, z.B. Muskelzellen, als solchen zu erkennen und von einem anderen Probentyp, z.B. Nervenzellen, zu unterscheiden. Vielmehr soll die KI in dieser Variante dafür trainiert werden und vorgesehen sein, dass ihr ausschließlich Proben eines bestimmten Typs, z. B. reale Bilder von Muskelzellschnitten, vorgelegt werden, um diese hinsichtlich bestimmter Merkmale und Strukturen zu analysieren.

Ist die KI beispielsweise für die Analyse mikroskopischer Schnitte von Muskelzellen ausgelegt und trainiert, um bestimmte Charakteristika einer realen Probe zu ermitteln, beispielsweise Anzahl, Dichte, Anordnung, Größe etc. der Muskelzellen in einer Probe, so kommt es erfindungsgemäß nicht zwingend darauf an, dass jedes einzelne erfindungsgemäß erzeugte synthetische Bild zum Trainieren der KI einen Phänotyp besitzt, wie er in der Realität tatsächlich bereits beobachtet wurde oder tatsächlich vorkommen kann. Ein entscheidender Aspekt und Vorteil der Erfindung besteht darin, dass durch die erfindungsgemäße Parametrisierung der Bilderzeugung an den Umrechnungsknoten auch solche synthetischen Bilder und zugehörige Musterlösungen erzeugt werden können, die in der Realität vorkommen könnten, auch wenn sie bislang nie oder nur selten beobachtet wurden. Die KI kann dadurch ein derart breites Spektrum an möglichen Ausprägungen eines bestimmten Probentyps erlernen und erkennen, wie es durch bisher bekannte Methoden oder gar durch Training anhand realer und manuell markierter Bilder nicht möglich war oder nur unter äußerst hohem Ressourcenaufwand möglich wäre. Da die KI in diesem Fall dafür vorgesehen ist, nur einen bestimmten Probentyp zu analysieren, beispielsweise nur mikroskopische Schnitte von Muskelzellen, ist es unschädlich für die Leistung der KI, wenn unter den Trainingsdaten auch solche sind, die in der Realität gar nicht vorkommen können. Die Parameterbereiche jedes einzelnen parametrischen Algorithmus der Umrechnungsknoten in der erfindungsgemäßen Pipeline können daher so breit gewählt werden, dass auch in der Realität seltene oder sehr unwahrscheinliche Konstellationen erzeugt werden, ohne dass es dabei kritisch wäre, wenn ein Parametergrenzwert in einen Bereich fällt, der gerade nicht mehr eine in der Realität mögliche Ausprägung des jeweiligen Probentyps erzeugt. Entscheidend ist, dass die KI trainiert wird, sowohl häufige als auch seltene oder unwahrscheinliche Ausprägungen erkennen und analysieren zu können.

Am Beispiel des Probentyps der Muskelzellschnitte sind Umrechnungsknoten vorgesehen, um z.B. die Koordinaten der Zellen in der Ebene und damit ihre Abstände zueinander durch Parametrisierung zwischen sehr geringen und großen Abständen zu variieren, wie es auch in realen Proben vorkommt. Der geringste Abstand benachbarter Muskelzellen wäre in der Realität die unmittelbare Berührung der Zellen, entsprechend einem bestimmten Parametergrenzwert der Zellkoordinaten. Bei Über- oder Unterschreitung des Parametergrenzwerts kann es, abhängig von anderen Parametern, wie z.B. dem Zelldurchmesser etc., in dem synthetisch generierten Bild zu einer in der Realität nicht vorkommenden Überlagerung kommen. Für das Training der KI sind solche Extremwertüberschreibungen jedoch unschädlich, wenn die KI für das Erkennen und Analysieren nur eines bestimmten Probentyps, hier von Muskelzellschnitten, vorgesehen ist, da es in diesem Fall darauf ankommt, dass die KI anhand eines realen Bildes des vorgegebenen Probentyps die trainierte Lösung, z.B. eine Segmentierung, vornehmen kann. Die KI muss nicht den bestimmungsgemäßen Probentyp von einem anderen Probentyp unterscheiden.

Die Festlegung der Bereiche bzw. Grenzwerte der Parameter der einzelnen Umrechnungsknoten erfordert daher nicht eine exakte Kenntnis jeder real möglichen Konstellation, sondern kann vom Fachmann aufgrund seines Fachwissens in plausiblen Bereichen eingestellt werden, ohne dass eine Grenzwertüberschreitung nachteilige Auswirkungen auf das Training einer KI hat. Im Gegenteil, breite Parameterbereiche erlauben die Generierung synthetischer Bilder von selten oder bislang nicht beobachteten Phänotypkonstellationen eines bestimmten Probentyps. Je breiter das Spektrum an Trainingsdaten für die KI ist, desto besser wird sie in der Anwendung generalisieren können.

Die in der vorliegenden Erfindung angewandte Technik der sogenannten "prozeduralen Generierung" verwendet somit eine Pipeline von parametrischen Algorithmen, um in steuerbarer Weise Texturen, Muster, Formen und Koordinaten biologischer Strukturen zu erzeugen. Die Parametrisierung der Algorithmen erlaubt es, dass Merkmale gezielt innerhalb vordefinierter Bereiche variiert werden können, um Aspekte des dem Algorithmus unterworfenen Bilddatensatzes zu verändern und zu steuern. Jede Änderung eines Parameters führt zur Erzeugung eines neuen synthetischen Bilddatensatzes, wodurch bereits die Variation eines einzigen Parameters innerhalb des vorgegebenen Bereichs eine Vielzahl von Bilddatensätzen liefert, die sich als Grundlage für das Training von KI eignen. Die Variation mehrerer oder aller Parameter in mehreren oder allen Algorithmen innerhalb der Pipeline ermöglicht die Erzeugung einer nahezu unendlichen Anzahl von synthetischen Trainingsbildern und zugehörigen Musterlösungen für das Training von KI. So ist es mit der vorliegenden Erfindung möglich, die bislang äußerst zeit- und ressourcenaufwändige, fehleranfällige Erzeugung von Trainingsdaten durch manuelle Annotation repräsentativer Realbilder zu ersetzen.

Beträgt die Anzahl der Parameter des Systems beispielsweise n und die Anzahl der verschiedenen Werte, die jeder Parameter annehmen kann m, wäre die Anzahl der Permutationen, d. h. die Anzahl verschiedener synthetischer Trainingsbilder, mⁿ. In einem Szenario mit (nur) n=10 und m=10 beträgt die Anzahl generierbarer Trainingsdatensätze zum Trainieren einer KI demnach 10 Milliarden. Um das Sammeln und die Annotation realer Bilder in dieser Anzahl manuell durchzuführen, wären Generationen von Menschenleben erforderlich. Obwohl die computergestützte Bilderzeugung je nach verfügbarer Rechenleistung ebenfalls Zeit in Anspruch nimmt, ermöglicht die Erfindung daher eine wesentlich schnellere, effektivere und zuverlässigere Erzeugung von Trainingsdaten für KI.

Figur 4a zeigt ein Beispiel der Generierung eines synthetischen Hellfeldbildes von H&E-gefärbten Muskelfaserschnitten nach dem Verfahren der vorliegenden Erfindung, ausgehend von einem Basisbilddatensatz (BBD) über eine Pipeline von hier nur wenigen Umrechnungsknoten (K1 bis K7) zu einem Endbilddatensatzes (EBD).

Der Basisbilddatensatz (BBD) ist im vorliegenden Beispiel ein Voronoi-Diagramm, welches Bilddaten und Koordinatendaten von Grundstrukturen eines Muskelfaserschnittes aufweist, wobei die Helligkeit der Bildpunkte deren jeweilige Distanz von einer Außengrenze der jeweiligen Voronoi-Region zum Startpunkt (Seed) dieser Region repräsentiert. Je größer die Distanz zum Startpunkt, desto heller ist die dem Bildpunkt zugeordnete Farbe. Im Falle der Grundstruktur eines Muskelfaserschnittes sind die Startpunkte des Voronoi repräsentativ für Positionen der Zellzentren, welche gleichzeitig die Positionen der Zellkerne repräsentieren können, und die Außengrenzen der jeweiligen Voronoi-Regionen sind repräsentativ für die Fasergrenzen der Muskelzellen. Jeder Bildpunkt ist somit bereits im Basisbilddatensatz, wie auch in den an den Umrechnungsknoten erzeugten Folgebilddatensätzen mit einer Information über seine Position im zweidimensionalen Raum, seine Farbe und seine Klassenzuordnung (z. B. Zellkern, Fasergrenze etc.) verknüpft. Diese Bild- und Koordinatendaten können an den Umrechnungsknoten durch den angewendeten parametrischen Algorithmus verändert werden.

Am Umrechnungsknoten K1 generiert in diesem Beispiel der zugrunde liegende parametrische Algorithmus anhand der jedem einzelnen Bildpunkt im zweidimensionalen Raum des Voronoi-Diagramms zugeordneten Information (Position, Klasse) zunächst einen Folgebilddatensatz, in welchem analog einer binären Segmentierungsmaske die Muskelfasern im Querschnitt repräsentierenden Voronoi-Regionen hell gegenüber Fasergrenzen und Zwischenzellbereichen dunkel abgegrenzt sind.

Der erhaltene Folgebilddatensatz wird am Umrechnungsknoten K2 mit Bild- und Koordinatendaten eines Ausschnitts einer mittels eines weiteren parametrischen Algorithmus erzeugten Voronoi-Struktur überlagert, welche typischerweise in Muskelzellschnitten sichtbare grobe Bindegewebsstrukturen (Perimysium) repräsentiert. Der erhaltene Folgebilddatensatz wird analog am Umrechnungsknoten K3 mit Bild- und Koordinatendaten einer Voronoi-Struktur überlagert, welche ebenfalls in Muskelzellschnitten sichtbare etwas feinere Bindegewebsstrukturen wiedergibt. Die an den Umrechnungsknoten K2 und K3 erzeugten Folgebilddatensätze enthalten nun zusätzlich Bildpunkte deren Bild- und Koordinatendaten mit der Information verknüpft sind, dass sie der Klasse der entsprechenden Bindegewebsstrukturen zugeordnet sind und nicht mehr der Klasse, die dem Bildpunkt an gleicher Stelle zuvor zugeordnet war.

Am Umrechnungsknoten K4 werden im zuvor erzeugten Folgebilddatensatz die Bildpunkte, welche anhand ihrer Bild- und Koordinatendaten der Klasse der Faserquerschnitte zugeordnet sind, mit Farbwerten versehen, die auf einer Überlagerung einfacher Rauschmuster mit Farbwerten basiert. Rauschmuster und Farbwerte unterliegen auch hier der parametrischen Variierbarkeit innerhalb von Bereichen, wie sie typischerweise beim Einfärben der Zellen während der Präparation von Gewebeschnitten auftreten können.

Am Umrechnungsknoten K5 werden im zuvor erzeugten Folgebilddatensatz analog zum Umrechnungsknoten K4 nun die Bildpunkte, welche anhand ihrer Bild- und Koordinatendaten nicht der Klasse der Faserquerschnitte sondern der Klasse des Bindegewebes und der Zellzwischenräume zugeordnet sind, mit Bilddaten überlagert, welche bei realen Schnittbildern häufig beobachtetem Hintergrund entsprechen, z.B. Gewebsfetzen usw. Die Daten für den Hintergrund werden wiederum mittels eines parametrischen Algorithmus erzeugt, sodass auch diesbezüglich innerhalb variabler Parameterwerte unterschiedliche mögliche Erscheinungsformen generiert werden können.

Am Umrechnungsknoten K6 werden in analoger Weise wiederum nur auf Bildpunkte der Klasse der Faserquerschnitte zusätzliche Faserartefakte (z.B. Schnittartefakte, Risse in den Fasern etc.) hinzugefügt, wie sie z.B. bei der Präparation der Proben auftreten. Bildpunkte der Klasse des Bindegewebes und der Zellzwischenräume sind hiervon ausgenommen.

Schließlich werden am Umrechnungsknoten K7 typischerweise bei solchen Gewebeschnitten erscheinende Zellkerne des Bindegewebes ergänzt und so der Endbilddatensatz (EBD) generiert, welcher aufgrund der Parametrisierbarbeit der Algorithmen an den einzelnen Umrechnungsknoten nur eine von nahezu unendlich vielen möglichen Erscheinungsformen fotorealistischer mikroskopischer Aufnahmen von Muskelfaserschnitten mit realistischer Simulation von Fasern, Artefakten, Bindegewebe und Zellkernen repräsentiert.

Figur 4b zeigt beispielhaft drei verschiedene, in diesem Fall binäre Segmentierungsmasken als mögliche Musterlösungen unterschiedlicher Klassen des Endbilddatensatzes (EBD) aus Figur 4a. In der ersten Segmentierungsmaske (i) sind die Muskelfasern im Querschnitt durch die Farbe Weiß hervorgehoben, während Zellzwischenräume und Bindegewebsstrukturen als Hintergrund schwarz dargestellt sind. In einer alternativen Segmentierungsmaske (ii) ist nur das grobe Bindegewebe weiß hervorgehoben, und die weitere alternative Segmentierungsmaske (iii) ist auf die Markierung der Zellkerne gerichtet. Die Erzeugung der verschiedenen Segmentierungsmasken (Klassifizierung) basiert auf den jedem Bildpunkt des Endbilddatensatzes zugeordneten Bild- und Koordinatendaten, einschließlich Klassenzugehörigkeit.

Mit der vorliegenden Erfindung wird somit der langwierige, kostspielige und fehleranfällige Prozess des Sammelns und Annotierens realer Daten überwunden. Die Erfindung löst auch die oben beschriebenen Nachteile der Verwendung von GANs zur Erzeugung fotorealistischer synthetischer biomedizinischer Bilder. Die vorliegende Erfindung ist geeignet, auf sehr kontrollierbare, effektive und weniger fehleranfällige Weise fotorealistische Trainingsbilder und zugehörige Musterlösungen zu erzeugen, die als Trainingsdaten für KI-Systeme nach dem Stand der Technik verwendet werden können.

Das erfindungsgemäße Verfahren kann auf bekannten Computergrafikprogrammen einfach umgesetzt werden. Ein geeignetes Computergrafikprogramm nach dem Stand der Technik ist die Software Blender, eine freie und offene Bildgestaltungssoftware (www.blender.org), es können jedoch auch andere Programme verwendet werden, wie z.B. Houdini von SideFX (www.sidefx.com) oder Substance Designer von Adobe.

## Patentansprüche

1. Computer-implementiertes Verfahren zur Erzeugung synthetischer Bilder, welche mikroskopische Aufnahmen eines biologischen Materials repräsentieren, sowie zu jedem synthetischen Bild wenigstens einer Musterlösung für das Trainieren einer künstlichen Intelligenz (Kl)
mit den Schritten, in denen man
- mittels Algorithmen einen zwei-dimensionalen Basisbilddatensatz unter Nutzung simulativer Verfahren erzeugt oder bereitstellt, welcher Bilddaten und Koordinatendaten von Grundstrukturen biologischen Materials umfasst, wobei jeder Bildpunkt in den Bild- und Koordinatendaten des Basisbilddatensatzes mit einer Information über seine Position im zweidimensionalen Raum, seine Farbe und seine Klassenzuordnung verknüpft ist,
- den Basisbilddatensatz einer Pipeline von Umrechnungsknoten zuführt, wobei jeder Umrechnungsknoten einen parametrischen Algorithmus umfasst, welcher dafür ausgelegt ist, durch prozedurale Generierung einen Folgebilddatensatz zu erzeugen, indem durch Umrechnung der Bilddaten und/oder Koordinatendaten mindestens ein Merkmal des dem Algorithmus zugeführten Bilddatensatzes verändert oder hinzugefügt wird, wobei Bildpunkte neue Farbinformationen und/oder neue Koordinatendaten und/oder eine neue Klassenzuordnung erhalten können,
wobei jeder parametrische Algorithmus mindestens einen Parameter umfasst, welcher innerhalb eines Wertebereichs variierbar ist, um die Veränderung des Merkmals im zugeführten Bilddatensatz bei der Umrechnung der Bilddaten und/oder Koordinatendaten zu steuern,
wobei, ausgehend vom Basisbilddatensatz, jeder Folgebilddatensatz in der Pipeline von Umrechnungsknoten sequentiell weiteren Umrechnungsknoten zugeführt wird, um einen Endbilddatensatz zu erzeugen, welcher ein synthetisches Bild einer mikroskopischen Aufnahme eines biologischen Materials repräsentiert,
- mittels wenigstens eines weiteren Algorithmus zu dem Endbilddatensatz oder einem dem Endbilddatensatz in der Pipeline vorausgegangenen Folgebilddatensatz wenigstens eine Musterlösung erzeugt.

2. Computer-implementiertes Verfahren nach dem vorhergehenden Anspruch, **dadurch gekennzeichnet, dass** die wenigstens eine Musterlösung eine Segmentierungsmaske ist.

3. Computer-implementiertes Verfahren nach einem der vorhergehenden Ansprüche, **dadurch gekennzeichnet, dass** zur Erzeugung einer Mehrzahl voneinander verschiedener synthetischer Bilder und zugehöriger Musterlösungen das Verfahren von der Zuführung des Basisbilddatensatzes zur Pipeline von Umrechnungsknoten bis zum Erhalt des Endbilddatensatzes mehrfach unter Veränderung der Parameter der parametrischen Algorithmen an den Umrechnungsknoten durchgeführt wird.

4. Computer-implementiertes Verfahren nach einem der vorhergehenden Ansprüche, **dadurch gekennzeichnet, dass** zur Erzeugung einer Mehrzahl voneinander verschiedener synthetischer Bilder und zugehöriger Musterlösungen wenigstens ein in der Pipeline von Umrechnungsknoten erzeugter Folgebilddatensatz in einem Zwischendatenspeicher abgelegt wird und anschließend mehrfach weiteren Umrechnungsknoten, welche in der Pipeline dem Umrechnungsknoten, an welchem der im Zwischendatenspeicher abgelegte Folgebilddatensatz erzeugt wurde, nachgeordnet sind, unter Veränderung der Parameter der parametrischen Algorithmen an diesen Umrechnungsknoten zugeführt wird.

5. Computer-implementiertes Verfahren nach einem der vorhergehenden Ansprüche, **dadurch gekennzeichnet, dass** die mikroskopische Aufnahme von biologischem Material ein Zellen umfassendes biologisches Material ist, vorzugsweise ein Gewebeschnitt, ein Abstrich oder eine Zellkultur ist.

6. Computer-implementiertes Verfahren nach einem der vorhergehenden Ansprüche, **dadurch gekennzeichnet, dass** der zwei-dimensionale Basisbilddatensatz die Bilddaten und Koordinaten eines Voronoi-Diagramms umfasst.

7. Verwendung von synthetischen Bildern und zugehöriger Musterlösungen, die durch das Verfahren nach einem der vorhergehenden Ansprüche erzeugt wurden, zum Trainieren einer künstlichen Intelligenz, vorzugsweise eines künstlichen neuronalen Netzes durch überwachtes Lernen für die Bilderkennung und/oder Auswertung mikroskopischer Aufnahmen von biologischem Material.

8. Computerprogramm mit Programmcode zur Durchführung des computer-implementierten Verfahrens nach einem der Ansprüche 1 bis 6.

## Claims

1. A computer-implemented method for generating synthetic images representing microscopic images of a biological material and, for each synthetic image, at least one sample solution for training an artificial intelligence (AI) comprising the steps of:
- using algorithms to generate or provide a two-dimensional base image data set using simulative methods, which comprises image data and coordinate data of basic structures of biological material, each pixel in the image and coordinate data of the base image data set being linked to information about its position in two-dimensional space, its color and its class assignment,
- feeding the base image data set to a pipeline of conversion nodes, each conversion node comprising a parametric algorithm which is designed to generate a subsequent image data set by procedural generation, wherein at least one feature of the image data set fed to the algorithm is changed or added by converting the image data and/or coordinate data, whereby pixels may receive new color information and/or new coordinate data and/or a new class assignment,
wherein each parametric algorithm comprises at least one parameter which can be varied within a range of values in order to set the change of the feature in the fed image data set during the conversion of the image data and/or coordinate data,
wherein, starting from the base image data set, each subsequent image data set in the pipeline of conversion nodes is sequentially fed to further conversion nodes in order to generate a final image data set which represents a synthetic image of a microscopic image of a biological material,
- generating at least one sample solution by means of at least one further algorithm for the final image data set or a subsequent image data set preceding the final image data set in the pipeline.

2. The computer-implemented method according to the preceding claim, **characterized in that** the at least one sample solution is a segmentation mask.

3. The computer-implemented method according to any one of the preceding claims, **characterized in that**, in order to generate a plurality of mutually different synthetic images and associated sample solutions, the method is carried out several times from the feeding of the base image data set to the pipeline of conversion nodes until the final image data set is obtained, while changing the parameters of the parametric algorithms at the conversion nodes.

4. The computer-implemented method according to any one of the preceding claims, **characterized in that**, in order to generate a plurality of mutually different synthetic images and associated sample solutions, at least one subsequent image data set generated in the pipeline of conversion nodes is stored in an intermediate data memory and then repeatedly fed to further conversion nodes, which are arranged in the pipeline downstream of the conversion node at which the subsequent image data set stored in the intermediate data memory was generated, by changing the parameters of the parametric algorithms at these conversion nodes.

5. The computer-implemented method according to any one of the preceding claims, **characterized in that** the microscopic image of biological material is a biological material comprising cells, preferably a tissue section, a smear or a cell culture.

6. The computer-implemented method according to any one of the preceding claims, **characterized in that** the two-dimensional base image data set comprises the image data and coordinates of a Voronoi diagram.

7. Use of synthetic images and associated sample solutions generated by the method according to any one of the preceding claims for training an artificial intelligence, preferably an artificial neural network by supervised learning for image recognition and/or evaluation of microscopic images of biological material.

8. A computer program comprising program code for carrying out the computer-implemented method according to any one of claims 1 to 6.

## Revendications

1. Procédé mis en œuvre par ordinateur et permettant de générer des images synthétiques représentant des images de microscopie d'un matériel biologique, et, pour chaque image synthétique, au moins un modèle de solution pour l'entraînement d'une intelligence artificielle (IA), comprenant les étapes consistant à
- à l'aide d'algorithmes, générer ou fournir un jeu de données d'image de base bidimensionnel en utilisant des procédés de simulation, lequel jeu comprend des données d'image et des données de coordonnées de structures de base de matériel biologique, chaque pixel au sein des données d'image et des données de coordonnées du jeu de données d'image de base étant relié à une information concernant sa position dans l'espace bidimensionnel, sa couleur et son affectation de classe,
- fournir le jeu de données d'image de base à un pipeline de nœuds de conversion, chaque nœud de conversion comprenant un algorithme paramétrique conçu pour générer un jeu de données d'image consécutif par génération procédurale en modifiant ou en ajoutant au moins une caractéristique du jeu de données d'image fourni à l'algorithme grâce à une conversion des données d'image et/ou des données de coordonnées, des pixels pouvant recevoir de nouvelles informations de couleur et/ou de nouvelles données de coordonnées et/ou une nouvelle affectation de classe,
où chaque algorithme paramétrique comprend au moins un paramètre qui peut être modifié à l'intérieur d'une plage de valeurs afin de commander, lors de la conversion des données d'image et/ou des données de coordonnées, la modification de la caractéristique dans le jeu de données d'image fourni,
où, à partir du jeu de données d'image de base, chaque jeu de données d'image consécutif du pipeline de nœuds de conversion est fourni de manière séquentielle à d'autres nœuds de conversion afin de générer un jeu de données d'image final représentant une image synthétique d'une image de microscopie d'un matériel biologique,
- générer au moins un modèle de solution au moyen d'au moins un algorithme supplémentaire pour le jeu de données d'image final ou pour un jeu de données d'image consécutif précédant le jeu de données d'image final dans le pipeline.

2. Procédé mis en œuvre par ordinateur selon la revendication précédente, **caractérisé en ce que** le modèle de solution, au moins au nombre de un, est un masque de segmentation.

3. Procédé mis en œuvre par ordinateur selon l'une des revendications précédentes, **caractérisé en ce que**, afin de générer une pluralité d'images synthétiques différentes les unes des autres et de modèles de solution associés, le procédé est mis en œuvre plusieurs fois, de la fourniture du jeu de données d'image de base au pipeline de nœuds de conversion jusqu'à l'obtention du jeu de données d'image final, en modifiant les paramètres des algorithmes paramétriques au niveau des nœuds de conversion.

4. Procédé mis en œuvre par ordinateur selon l'une des revendications précédentes, **caractérisé en ce que**, afin de générer une pluralité d'images synthétiques différentes les unes des autres et de modèles de solution associés, au moins un jeu de données d'image consécutif généré dans le pipeline de nœuds de conversion est stocké dans une mémoire de données intermédiaire, puis est fourni plusieurs fois à d'autres nœuds de conversion, qui sont placés dans le pipeline en aval du nœud de conversion au niveau duquel le jeu de données d'image consécutif stocké dans la mémoire de données intermédiaire a été généré, en modifiant les paramètres des algorithmes paramétriques au niveau des dits nœuds de conversion.

5. Procédé mis en œuvre par ordinateur selon l'une des revendications précédentes, **caractérisé en ce que** l'image de microscopie de matériel biologique est celle d'un matériel biologique comprenant des cellules, de manière préférée une coupe de tissu, un frottis ou une culture cellulaire.

6. Procédé mis en œuvre par ordinateur selon l'une des revendications précédentes, **caractérisé en ce que** le jeu de données d'image de base bidimensionnel comprend les données d'image et les coordonnées d'un diagramme de Voronoï.

7. Utilisation d'images synthétiques et de modèles de solution associés qui ont été générés grâce au procédé selon l'une des revendications précédentes afin d'entraîner une intelligence artificielle, de manière préférée un réseau neuronal artificiel, grâce à un apprentissage supervisé destiné à la reconnaissance d'images et/ou à l'évaluation d'images de microscopie de matériel biologique.

8. Programme informatique comprenant un code de programme permettant de mettre en œuvre le procédé mis en œuvre par ordinateur selon l'une des revendications 1 à 6.
